# EUROPEAN PATENT SPECIFICATION

(11) **EP 1 464 559 B1**
(45) Date of publication and mention of the grant of the patent: **24.08.2005**
(21) Application number: 03007775.4
(22) Date of filing: 04.04.2003
(51) Int. Cl.: B62D 1/187, B62D 1/19

(54) **Steering tilt column assembly for vehicle**
Schwenkbare Lenksäule für ein Fahrzeug
Colonne de direction réglable en inclinaison pour véhicule

(43) Date of publication of application: 06.10.2004
(73) Proprietor: Mando Corporation, Kyunggi-do (KR)
(72) Inventor: Park, Jung-Sik, Wonju City, Kangwon-do (KR); Lee, Byung-Hwan, 220-805 Wonju Kangwon-do (KR)
(74) Representative: TER MEER - STEINMEISTER & PARTNER GbR

(56) References cited:
- GB-A- 2 312 272
- US-A- 5 144 855
- US-A1- 2002 020 244
- US-B1- 6 282 977

## Description

### BACKGROUND OF THE INVENTION

### 1. Field of the Invention

The present invention relates to a steering tilt column assembly according to the preamble of claim 1. It is directed in particular to a steering tilt column assembly for a vehicle which is capable of implementing a stable engaged state of an engaged fixing gear and driving gear for continuing a tilting state, removing some parts by directly operating an upward rotation operation of a driving gear using a tilt lever, preventing a noise and loosening by preventing a bolt used for a lever hinge of a tilt lever from affecting to a rotation friction during a rotation of a tilt lever, increasing an impact absorbing effect and unit cost by improving a material and structure of an initial impact absorbing capsule used for a mounting bracket, and implementing an impact absorbing and fixed engagement without using a dual column by making an engaging structure of a lower portion of a column and a lower bracket have a cross sectional portion with a decreased diameter.

### 2. Description of the Background Art

A steering column according to the preamble of claim 1 is known from US 6,282,977A.

Generally, a vehicle steering tilt column assembly is installed in an outer portion of a steering shaft 20 adapted to transfer a rotational force from a steering wheel to a gear box for thereby supporting a rotation of the same and connecting to a vehicle body.

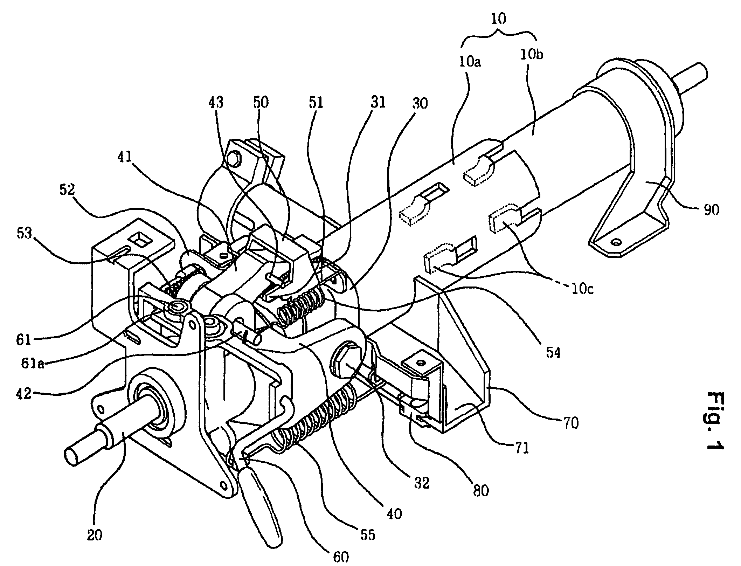

Figure 1 is a view illustrating a conventional steering tilt column assembly.

As shown in Figure 1, a unit for connecting a steering tilt column assembly to a vehicle body includes a mounting bracket 70 fixed in an intermediate position of the column 10, a capsule 80 inserted into a slot at both sides of the mounting bracket, and a lower bracket 90 which is fixed in a lower position of the column 10 formed of an outer tube 10a and an inner tube 10b, namely, in a lower portion of the inner tube 10b.

The steering shaft 20 includes an upper and lower ends connected with a steering wheel and a gear box, respectively, and is connected with a universal joint adapted to transfer a rotational force in a bent state therebetween.

In addition, the steering column adapted to support the steering shaft includes a tilting apparatus adapted to maintain a bent state of the steering shaft and to adjust an angle of a steering wheel based on a driver's physical state.

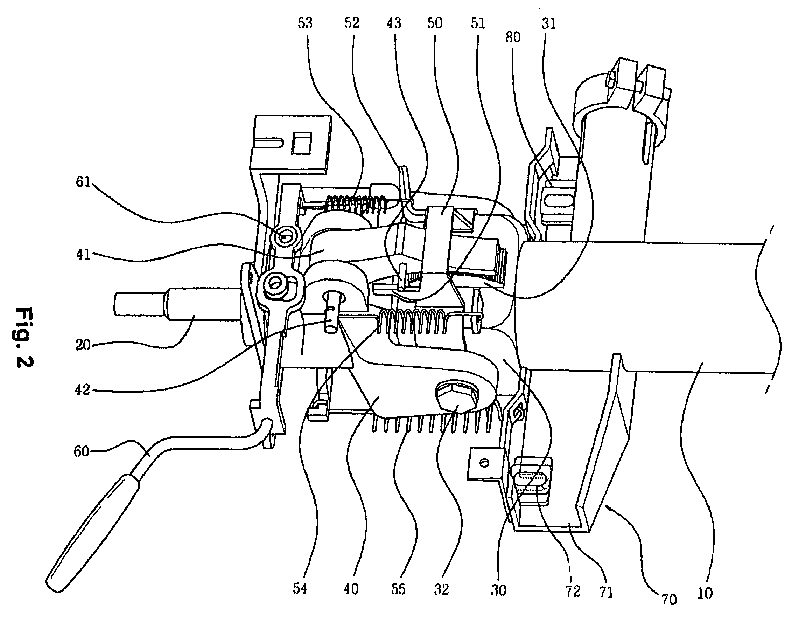

Figure 2 is a view illustrating the above tilting apparatus.

Here, a column bracket 30 is installed in an upper portion of the steering column 10. A tilt bracket 40 is installed in an outer portion at both sides of the column bracket 30 for surrounding the same. The column bracket 30 and the tilt bracket 40 are connected with both ends of the split steering shaft 20, respectively.

In addition, both sides of the column bracket 30 and the tilt bracket 40 are engaged to the tilt hinge 32, respectively, and when the steering shaft 20 installed in the interior of the same is bent, the same is bent by the universal joint(not shown) based on a cooperation of the same.

A circular shaped fixing gear 31 which as the same center as the tilt hinge 32 and a threaded portion in an outer surface of the same is installed in an outer one side of the column bracket 30. A driving gear 41 is formed in the tilt bracket 40 and is engaged with the fixing gear 31.

Namely, one end of the driving gear 41 is engaged to the gear hinge 42 in the tilt bracket 40, and a threaded portion engaged with a threaded portion of the fixing gear 31 is formed in an inner surface of the front end of the same and is elastically supported by a spring(not shown) based on a continuous engagement.

In addition, the tilt bracket 40 has a certain structure capable of rotating the driving gear 41 for angling the column bracket 30, the tilt bracket 40 and the steering shaft 20 by distancing the engaged driving gear 41 and the fixing gear 31.

Namely, there is provided a driving pin 43 protruded in one side of the driving gear 41. A rotation member 50 is installed in a lower side of the driving pin 43 for thereby lifting the driving gear 41 through the driving pin 43. The rotation member 50 is rotatably installed by the tilt hinge 32 at its center.

At this time, the rotation member 50 is installed between the tilt bracket 40 and the column bracket 30 in such a manner that opposite bent both ends of the same are passed through by the tilt hinge 32, and the intermediate portion of the same covers an outer surface of the driving gear 41. A rotation portion 51 is formed in a lower side of the driving pin 43.

The portion in which the rotation portion 51 of the rotation member 50 is formed is connected with the gear hinge 42 which is a rotation point of the driving gear 41 and is recovered after the operation of the rotation member 50. A recovering spring 54 is installed so that the tilt bracket 40 and the column bracket 30 are bent and recovered to their original positions.

Another recovering spring 55 is installed in the opposite portion of the recovering spring 54 with respect to the tilt hinge 32 so that the tilt bracket 40 and the column bracket 30 are bent to the other side and then are recovered.

In addition, A connection portion 52 which is longitudinally extended in the direction of the tilt bracket 40 and is bent is formed in the portion opposite to the rotation portion 51 of the rotation member 50. The above connection potion 52 is connected through an end portion of the tilt lever 60 in which an intermediate portion is rotatably fixed in the lever hinge 61 formed in the tilt bracket 40 and the connection spring 53.

Therefore, when pulling the handle of the tilt lever 60, an end portion of the tilt lever 60 pushes the connection portion 52, and the rotation member 50 is rotated. Therefore, the rotation portion 52 lifts up the driving gear 41, and the driving gear 41 and the fixing gear 31 are distanced for thereby implementing a tilting function.

The steering tilt column assembly has an impact absorbing structure.

As one of the functions, it is directed to implementing an initial impact absorbing function. There are provided a capsule 80 inserted into the mounting bracket 70, and a collapsing structure capable of implementing an impact absorbing function in the lower mounting portion.

As shown in Figure 1, in the latter case, the steering column 10 is engaged with two hollow tubes of an outer tube 10a and an inner tube 10b for thereby contracting when an impact is transferred.

However, the conventional vehicle steering column tilting apparatus has the following problems.

First, since there are not any structure and apparatus for supporting the engagement of the fixing gear and the driving gear, the driving gear and the fixing gear are easily distanced when an external impact is transferred.

Namely, in the case that an abnormal external force or vibration occurs, since there is not any member for continuously preventing by pressing the driving gear 41 in the direction of the fixing gear 31, the driving gear 41 may be lifted up for thereby unlocking the locked state.

Second, the rotation member 50 is installed between the tilt bracket and the column bracket using a tilt hinge for thereby lifting the driving gear 41. However, the rotation member is formed of a thin steel plate rotating. Therefore, the strength is weak, and the rotation member 50 may be bent when an external impact is transferred, so that a pop-up problem(steering wheel is popped up) may occur. Furthermore, the rotation member 50 may be omitted by improving the structure.

Third, as shown in Figure 1, in the steering column tilting apparatus, a common bolt 61 a is engaged in the lever hinge 61 for rotatably fixing the tilt lever 60 in the tilt bracket 40.

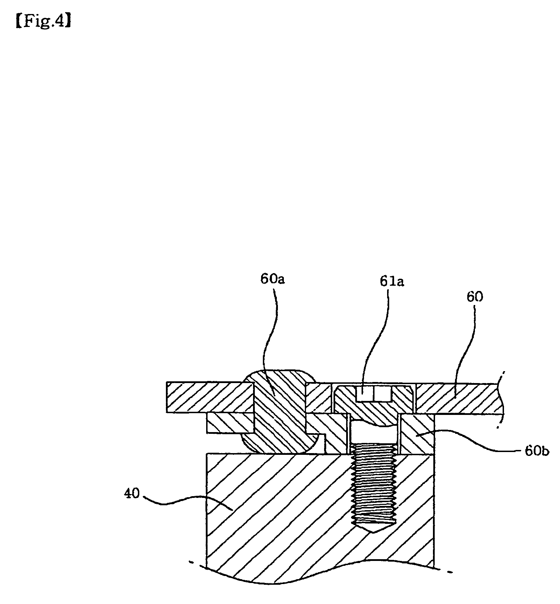

The engagement of the bolt 61 a will be described. As shown in Figure 4, there are needed a plate 60b, a rivet 60a, a bolt 61a and a lever 60. In addition, a work process such as a bolt riveting portion of a tilt bracket is needed. Therefore, the fabrication cost is increased.

In addition, since the upper surfaces of the bolt 61a and the tilt lever 60 closely contacted, and the lower surface of the tilt lever 60 and the upper surface of the tilt bracket 40 are closely contacted, when the bolt 61a is strongly tightened, when the tilt lever 60 is rotated, a friction force is increased, so that it is difficult to handle. In addition, the bolt is too loosely tightened, a noise occurs, and the bolt 61 a is gradually loosened.

Fourth, there are problems in the capsule 80 adapted to fix the mounting bracket 70 to a vehicle body and a structure for assembling the capsule.

In the mounting bracket 70, an intermediate portion of the same surrounds the upper side of the steering column 10, and an expanding portion 71 is formed in extended both sides and is opposite to the vehicle body. A slot 72 which is opened in the upper side is formed in the expanding portion 71. In addition, the capsule 80 is formed by injecting aluminum. An insertion groove 81 is formed in both sides in order for an outer surface of the slot 72 to be inserted thereinto. A bolt hole 82 is formed in the center, so that the bolt 84 passes through the same and is fixed to the vehicle body.

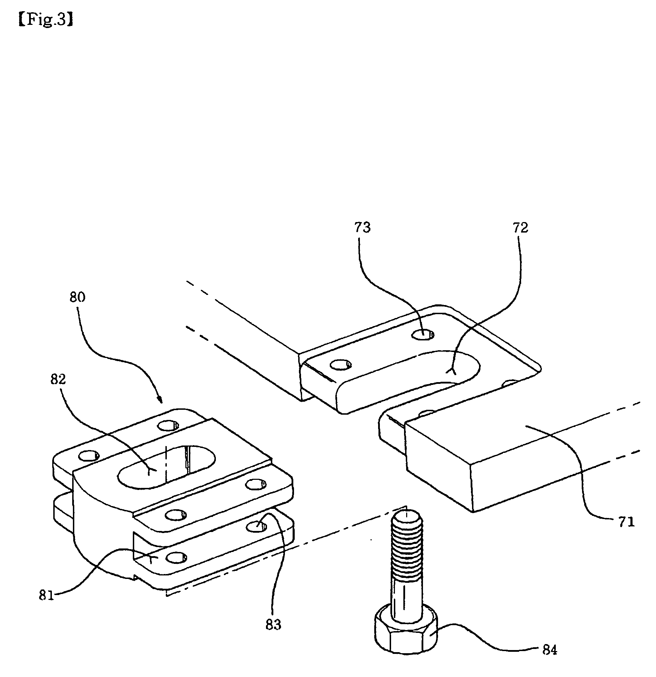

As shown in Figure 3, a plurality of capsule holes 83 and slot holes 73 which pass through the upper and lower sides are formed in the engaged outer surfaces of the capsule 80 and the slot 72. A plastic melting material is injected in the interior of the same for thereby hardening the same and forming a pin shape.

Namely, the hardened plastic melting material connects the capsule 80 fixed to the vehicle body and the mounting bracket 70 fixed to the steering column 10. When an external impact is applied to the steering column10, the plastic melting material is broken, so that the steering column 10 is separated from the capsule 80.

However, in the escaping apparatus of a conventional steering column, the capsule and the basic structure of the mounting bracket engaged thereto are complicated. In addition, a complicated process for injecting a plastic melting material and hardening the same in the slot hole communicating with the capsule hole formed in the capsule is needed. Therefore, the installation process is complicated, and the fabrication cost is increased.

Furthermore, when managing the weights using a fixing pin formed of plastic, since the weight managing limit is low based on the property of the material, the applicable range is limited. In order to overcome the above problems, when the number and thickness of the fixing pin are adjusted, the structure may be more complicated.

Fifth, there is a problem in the impact absorbing structure formed of the steering column 10 and the lower bracket 90 adapted to support the lower portion of the steering column.

The important points of the impact absorbing structure are that a lower bracket should be used for fixing the lower portion of the column to the vehicle body. Since the lower bracket of the lower portion of the column is integrally welded, an additional inner tube must be used for implementing an impact absorbing structure. In addition, the lower bracket must be welded to the lower portion of the inner tube.

Figure 1 is a view illustrating the conventional impact absorbing structure.

Namely, a collapsing problem occurs between the outer tube 10a which surrounds the steering shaft 20 and the inner tube 10b fixed to the lower bracket for thereby absorbing an impact energy when a vehicle collides. The inner tube 10b is fixed to the vehicle body by the lower bracket 90, and one end of the same is engaged to an inner surface of the outer tube 10a. A plurality of curling portions 10c are formed along an outer circumference in the inner surface of the outer tube 10a.

In particular, the above formation of the curling potion 10c is performed in such a manner that the portions remaining piercing operations are formed in the outer tube 10a are inwardly rolled. The above curling portion 10c is assembled to the end portion of the inner tube 10b for thereby implementing a friction force.

Therefore, when an impact energy is applied through the steering shaft 20 when a vehicle collides, the end portion of the inner tube 10b of the lower mounting portion makes a friction with the curling portion 10c of the outer tube 10a, so that a collapsing operation is performed for thereby absorbing the impact energy.

However, in the above structure, when the outer tube 10a and the inner tube 10b are assembled, the curling portion 10c may be broken based on the material for thereby causing an error product. In particular, the process for forming the curling portion 10b in the outer tube 10a is very complicated. In addition, the inner tube must be added. Therefore, the number of parts is increased.

### SUMMARY OF THE INVENTION

Accordingly, it is an object of the present invention to provide a steering tilt column assembly for a vehicle which overcomes the problems encountered in the conventional art.

It is another object of the present invention to provide a steering tilt column assembly for a vehicle which is capable of implementing a stable engagement of a fixing gear and a driving gear for obtaining a desired tilting state by providing a guard portion in an upper portion of a tilt bracket and a wedge in a lower portion of the guard portion for thereby enhancing a stability of a tilting state.

It is further another object of the present invention to provide a steering tilt column assembly for a vehicle which is capable of removing a conventional rotation member and increasing a productivity and decreasing a fabrication cost by directly performing an upward rotation operation of a driving gear using a tilt lever and increasing a productivity and decreasing a fabrication cost.

It is still further another object of the present invention to provide a steering tilt column assembly for a vehicle which is capable of preventing an engaging force of a bolt from affecting a rotation friction when a tilt lever is rotated by using a bolt having a step straight line portion for a bolt of a lever hinge portion of a tilt lever and preventing a noise in a tilt lever and a bolt from being loosened.

It is still further another object of the present invention to provide a steering tilt column assembly for a vehicle which is capable of implementing an easier fabrication and lower price by improving a material and structure of an initial impact absorbing capsule used in a mounting bracket and implementing a desired impact absorption based on only friction force between the capsule and a mounting bracket.

It is still further another object of the present invention to provide a steering tilt column assembly for a vehicle which is capable of implementing a stable engagement and a desired impact absorption when an impact is applied by providing an engaging structure of a lower portion of a column and a lower bracket having a cross section with a decreased diameter.

To achieve the above objects, a steering column assembly according to the invention comprises the features defined in claim 1.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating a conventional steering column assembly;
Figure 2 is a perspective view illustrating a tilting structure of a conventional steering column;
Figure 3 is a perspective view illustrating a conventional capsule and assembled state;
Figure 4 is a cross sectional view illustrating a structure of a conventional hinge bolt;
Figure 5 is a perspective view illustrating the whole construction of a steering tilt column assembly for a vehicle according to the present invention;
Figure 6 is a plan view illustrating the whole construction of a steering tilt column assembly for a vehicle according the present invention;
Figure 7 is a bottom view illustrating the whole construction of the present invention;

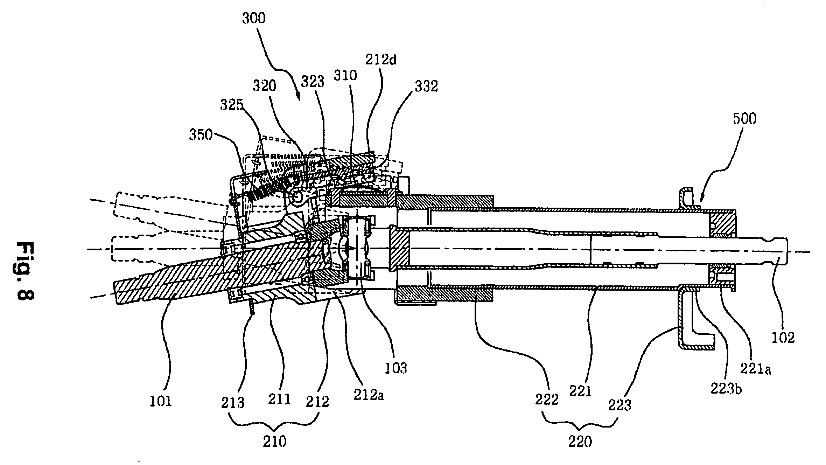

Figure 8 is a front cross sectional view illustrating the whole construction of a steering tilt column assembly for a vehicle according to the present invention;
Figure 9 is a disassembled perspective view illustrating the construction of major elements of a tilting adjusting unit according to the present invention;

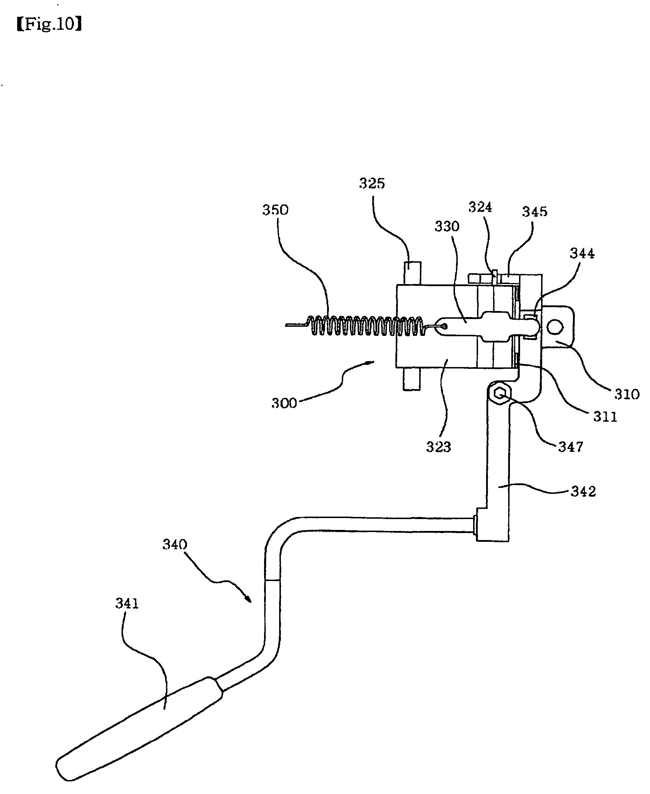

Figure 10 is a plan view illustrating an operation state of a tilting adjusting unit according to the present invention;

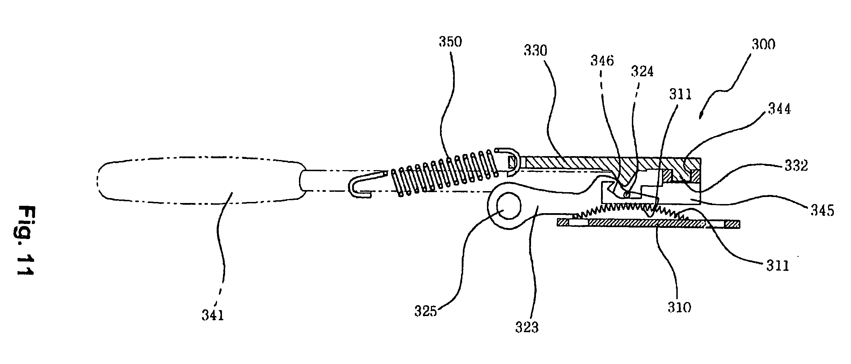

Figure 11 is a front cross sectional view illustrating an operational state of a tilting adjusting unit according to the present invention;
Figure 12 is a cross sectional view illustrating a hinge portion of a tilt lever according to the present invention;
Figure 13 is a cross sectional view illustrating a hinge portion of a tilt lever according to another embodiment of the present invention;
Figure 14 is a view illustrating the construction of an initial impact absorbing unit according to the present invention;
Figure 15 is a cross sectional view illustrating a capsule and assembled state according to the present invention;
Figure 16 is a cross sectional view illustrating a capsule mounting groove according to another embodiment of the present invention;
Figure 17 is a cross sectional view illustrating a capsule according to the present invention;
Figure 18 is a view illustrating the construction of a lower side impact absorbing unit according to the present invention;
Figure 19 is a cross sectional view illustrating an assembled state of a lower side impact absorbing unit according to the present invention; and
Figure 20 is a view illustrating the construction of a lower side impact absorbing unit according to another embodiment of the present invention.

### <Descriptions of reference numerals of major elements of the drawings>

| <Descriptions of reference numerals of major elements of the drawings> | |
|---|---|
| 100: steering shaft | 101: upper side shaft |
| 102: lower side shaft | 103: universal joint |
| 200: steering column | 201: hinge pin |
| 210: upper unit | 211: upper side tube |
| 212: tilt bracket | 213: shroud bracket |
| 220: lower unit | 221: lower side tube |
| 222: column bracket | 223: lower mounting bracket |
| 230: tension spring | 300: tilting adjusting unit |
| 310: fixing gear | 311: threaded portion |
| 320: driving gear | 321: threaded portion |
| 323: protrusion | 324: side surface protrusion |
| 325: shaft pin | 330: wedge member |
| 331: wedge portion | 332: connection protrusion |
| 340: tilt lever | 341: handle |
| 342: horizontal portion | 343: lever hinge hole |
| 344: engaging hole | 345: extended portion |
| 346: inclination portion | 347: hinge bolt |
| 350: spring | 400: initial impact absorbing unit |
| 410: capsule | 411: upper plate |
| 412: lower plate | 413: protrusion |
| 414: electric portion | 415: bolt hole |
| 500: lower side impact absorbing unit | |

### DETAILED DESCRIPTION OF THE PREFERRED EMBODIMENTS

The construction and operation of the present invention will be described with reference to the accompanying drawings.

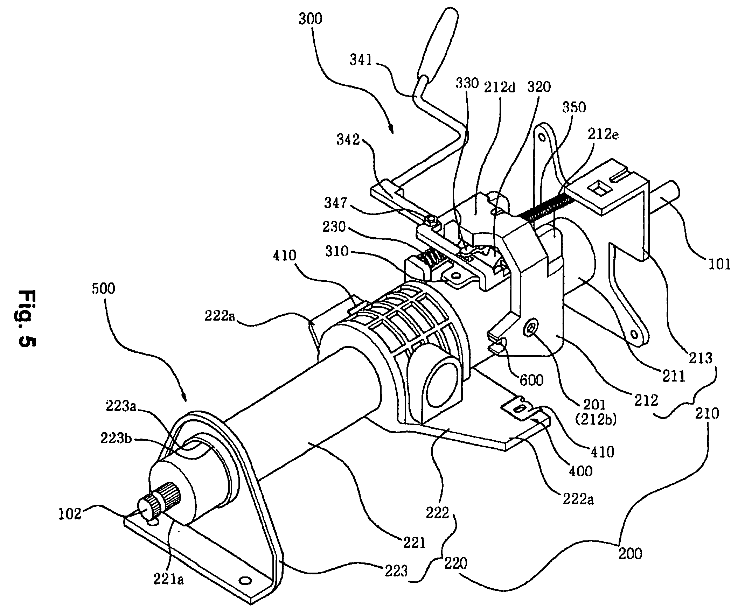

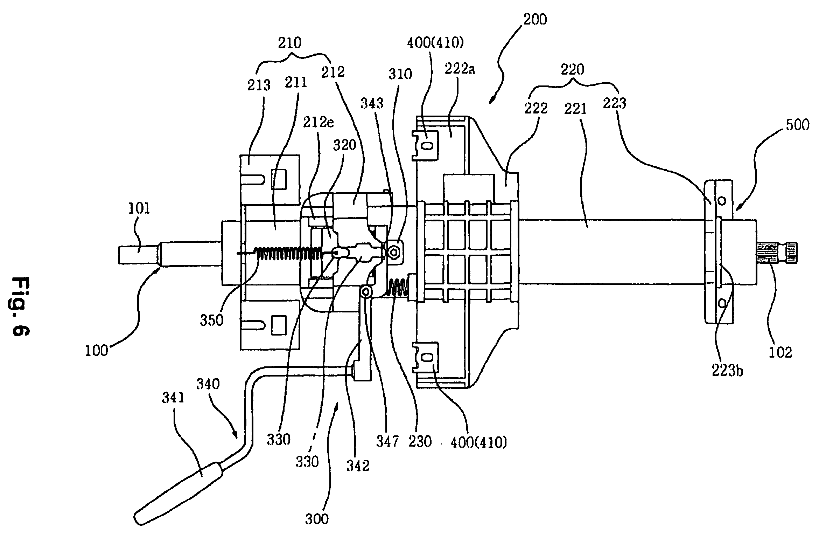

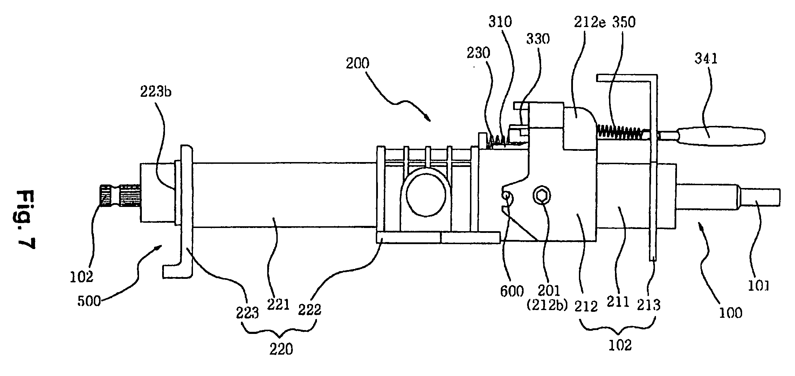

Figure 5 is a perspective view illustrating the whole construction of a steering tilt column assembly for a vehicle according to the present invention, Figure 6 is a plan view illustrating the whole construction of a steering tilt column assembly for a vehicle according the present invention, and Figure 7 is a bottom view illustrating the whole construction of the present invention.

As shown therein, a steering tilt column assembly according to the present invention includes a steering shaft 100 which is formed of an upper side shaft 101 and a lower side shaft 102 connected by a universal joint 103 in their lower and upper portions, an upper side tube 211 which includes the steering shaft 100 and surrounds the surrounding portion of the upper side shaft 101, a tilt bracket 212 connected to the upper side tube, an upper unit 210 which includes a shroud bracket 213 for fixing the above elements to a vehicle body, a lower side tube 221 which surrounds the surrounding portion of the lower side shaft 102, a column bracket 222 which has a capsule assembling slot 222b in a left and right wing portion 222a in a connected state to an upper portion of the lower side tube, and a lower unit 220 which includes a low mounting bracket 223 for fixing a lower portion of the lower side tube 221 to a vehicle body.

Therefore, a tilting operation is implemented by connecting a hinge pin hole 212b formed in left and right sides of the tilt bracket 212 and a hinge pin hole 212b formed in left and right sides of the column bracket 222 using a hinge pin 201.

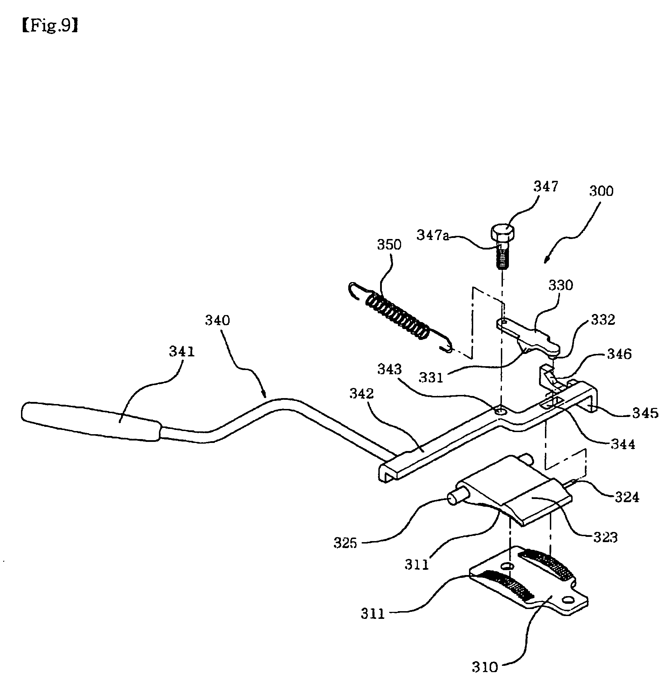

Namely, as shown in Figure 7, the upper unit 210 which includes the upper side shaft 101 with respect to the lower unit 220 including the lower side shaft 102 is bent at a certain angle about the hinge pin 201. The tilting adjusting unit 300 according to the present invention adapted to implement the above tilting operation will be described with reference to Figure 9.

There are provided a fixing gear 310 which is fixed to an upper surface of the column bracket 222 and has a threaded potion 311 in the upper surface of the same, a driving gear 320 which has a protrusion 323 of the upper surface and is rotatable on the tilt bracket 212 and is constructed in such a manner that the threaded portion 321 of the lower surface is engaged to the threaded portion of the fixing gear, and a wedge member 330 which has a wedge portion 331 adapted to press the protrusion 323 of the driving gear 320 and a connection protrusion 332 in the lower surface of the front end.

At this time, the fixing gear 310 is fixed in a conventional manner using an engaging bolt. The driving gear 320 is upwardly and downwardly rotatable by inserting the rear end of the same between the hinge support ribs 212e protruded from both sides of the upper surface of the tilt bracket 212, and the shaft pin 325 passes through in a horizontal direction.

In the tilt bracket 212 according to the present invention, as an important element, the guard portion 212d which is formed across both sides in the portion higher than the hinge support ribs 212e protruded for installing the driving gear is provided, so that it is possible to press the upper surface of the wedge member 330.

The wedge member 330 and the driving gear 320 positioned in the lower portion of the guard portion 212d are operated by the tilt lever 340.

The tilt lever 340 includes a horizontal portion 342 which has a hinge hole 343 for a rotatable engagement on the tilt bracket 212 by inserting the engaging hole 344 into which the connection protrusion 332 of the wedge member 330 is inserted and the hinge bolt 347, a handle 341 which is extended from one side end of the horizontal portion 342, an extended portion 345 extended from the other side of the horizontal portion 342, and an inclination portion 346 which is inclined for lifting the side surface protrusion 324 of the driving gear 320.

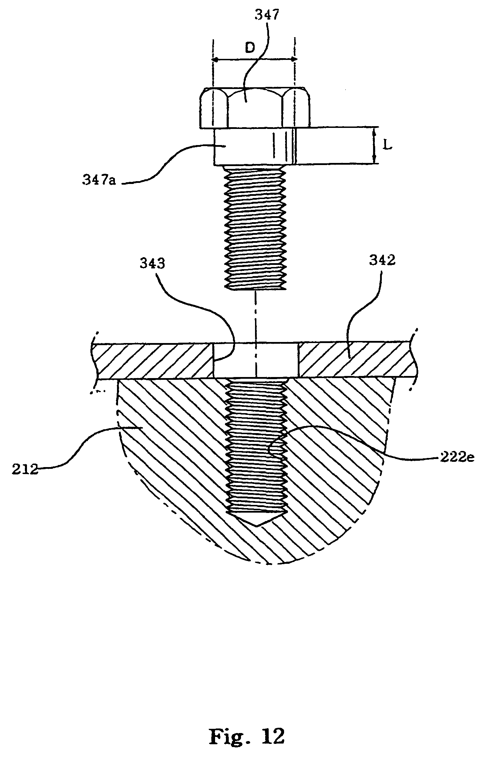

In addition, as shown in Figure 12, the tilt lever 340 is engaged by the hinge bolt 347 for thereby implementing a stable rotation.

The hinge bolt 347 which has a hinge point obtained by inserting the same into the hinge hole 343 of the horizontal portion 342 of the tilt lever 340 is engaged based on a straight line portion 347a in the lower portion of the bolt head.

The straight line portion 347a has a diameter D larger than the diameter of the threaded portion of the bolt and a length L longer than the thickness of the horizontal portion 342 or a (+)tolerance. Therefore, when engaged using the hinge bolt 347, since the horizontal portion 342 is not pressed by the bolt head, the horizontal portion 342 does not have a friction resistance.

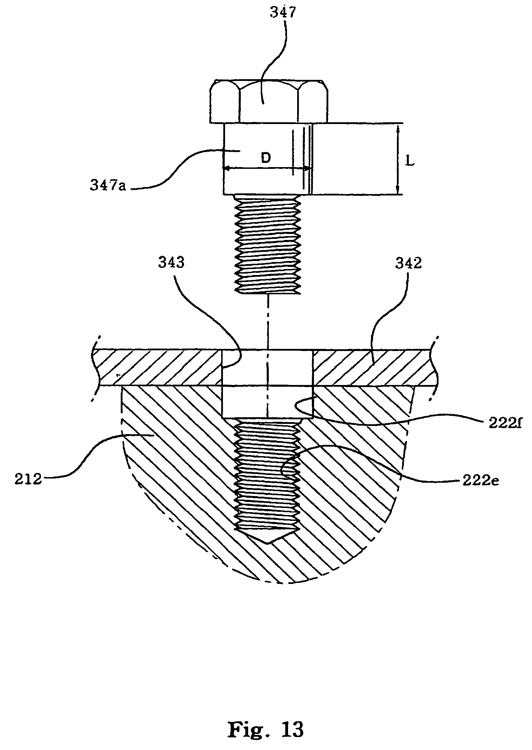

At this time, as shown in Figure 13, the hinge bolt 347 according to the present invention may be implemented in another embodiment of the present invention. Namely, as shown in Figure 13, an expanding hole 222f is formed in an upper portion of the threaded hole 222a to which the hinge bolt 347 is engaged, and a part of the straight line portion 347a of the hinge bolt 347 is inserted into the expanding hole 222f. At this time, the length L of the straight line portion 347a is the size that the depth d of the expanding hole 222f is added with the thickness of the horizontal portion 342. The allowable tolerance is (+), not (-).

In addition, the above engagement is performed for the reason that it is possible to prevent a movement of the hinge bolt 347 and increase the engaging force.

In addition, a tension spring 230 is connected between the wedge member 330 and the shroud bracket 213 for pulling the wedge member 330 in one direction. A tension spring 230 is connected between the tilt lever 340 and the shroud bracket 213 for returning the tilt lever 340 to its original position when the same is rotated.

In the present invention, an initial impact absorbing unit 400 is provided for fixing the column bracket 222 to the vehicle body.

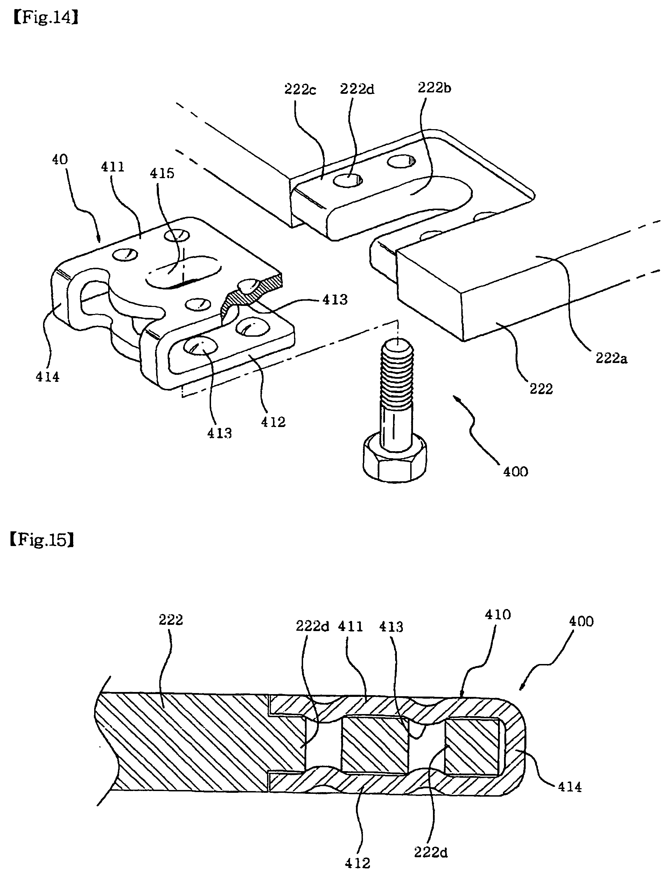

Namely, as shown in Figure 14, in the initial impact absorbing unit 400, the capsule 410 includes an upper plate 411 having a plurality of protrusions 413 in the lower surface, a lower plate 412 which has a plurality of protrusions 413 in the upper surface, and an elastic portion 414 which integrally connects one side of the upper plate and one side of the lower plate.

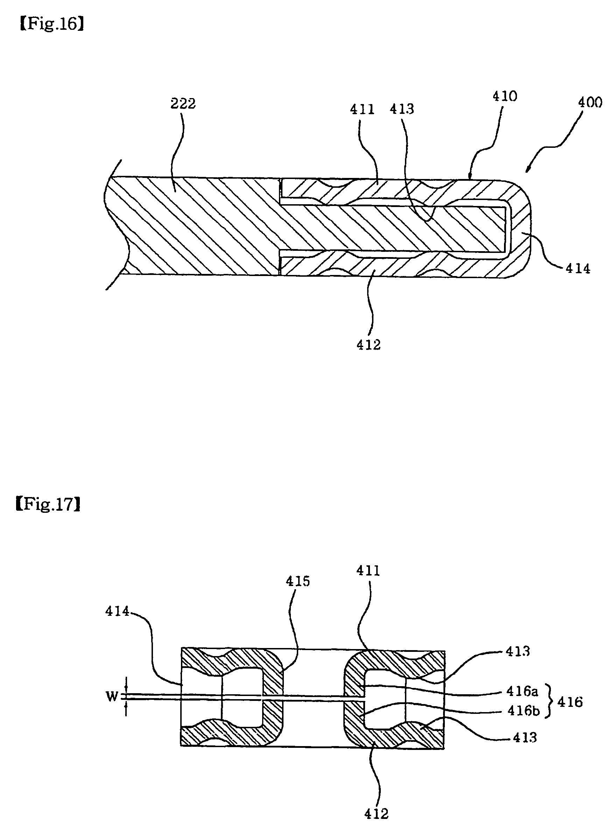

In addition, as shown in Figure 17, the capsule 410 has a certain width W between the end surface of the support member 416a of the upper plate 411 and the end surface of the support member 416b of the lower plate 412 when the upper plate 411 and the lower plate 412 are parallel. The above width W is smaller than the heights of the protrusions 413 formed in the upper plate 411 and the lower plate 412.

The width W is provided for preventing the protrusions of the upper plate 411 and the lower plate 412 from being broken due to an over engaging force of the bolt when the engaging bolt is inserted through the bolt hole 415 and is engaged to the vehicle body.

If the protrusions 413 of the upper plate 411 and the lower plate 412 are all broken and are engaged due to an over engaging force of the engaging bolt, the capsule 410 and the wing portions 222a of the column bracket 222 are not escaped from each other when an impact occurs, so that it is impossible to implement a desired impact absorbing function.

In addition, as shown in Figure 14, the column bracket 222 of the present invention for using the capsule 410 includes a mounting groove 222c for mounting the capsule 410 therein in the surrounding portion of the slot 222b of the wing portion 222a, and the capsule 410 is inserted into the mounting groove 222c.

As show in Figure 15, the through holes 222d corresponding to the position of the protrusions 413 of the capsule 410 are formed in the mounting groove 222c. Therefore, it is possible to engage the capsule in a state that the protrusions 413 are in the through holes 222d as shown in Figure 17. In addition, as shown in Figure 17, the through holes 222d may not be formed.

In the present invention, a lower side impact absorbing unit 500 is provided between the lower side tube 221 and the lower mounting bracket 223.

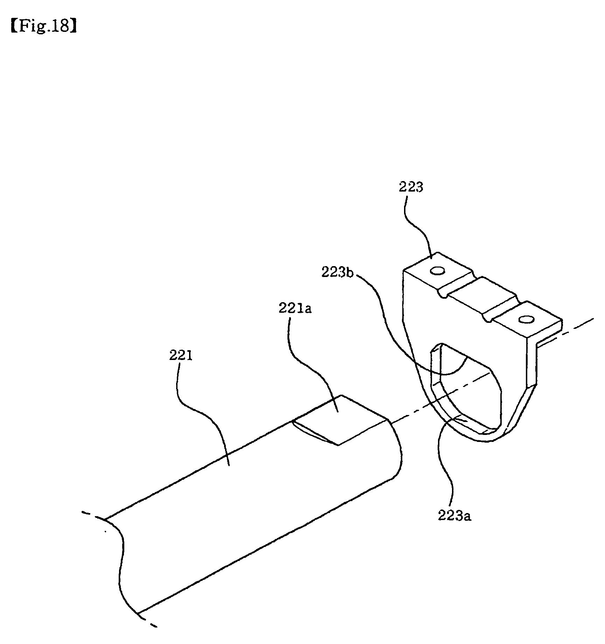

As shown in Figure 18, a flat surface 221 a is formed in an end portion of the lower side tube 221 based on a decrease of the outer diameter, and the lower mounting bracket 223 has an insertion hole 223a having a straight line inner diameter portion 223b to be matched with a cross section shape of the end portion in which the flat surface of the lower side tube is formed.

Therefore, when an impact occurs in the longitudinal direction of the column, the straight line inner diameter portion 223b of the insertion hole 223a goes into the cylindrical portion after the flat surface 221 a. In this state, a friction force is increased for thereby absorbing the impact based on the friction force.

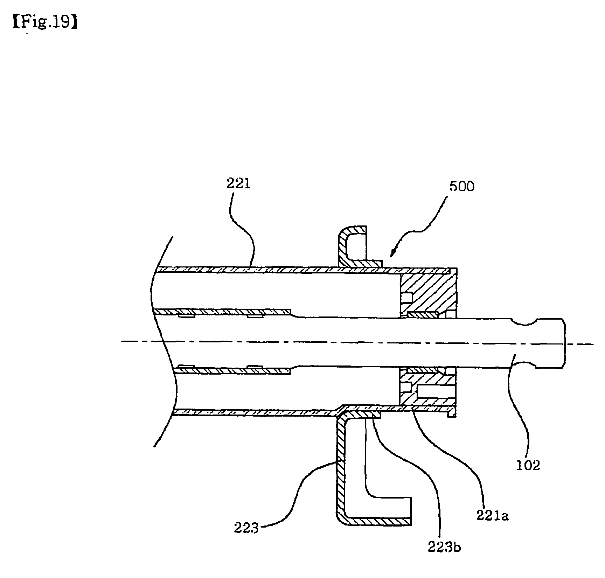

At this time, as shown in Figure 19, the lower mounting bracket 223 may has an inner extended portion 223c formed by extending the inner circumference of the insertion hole 223a and bending the same in a certain direction for thereby enhancing a friction force.

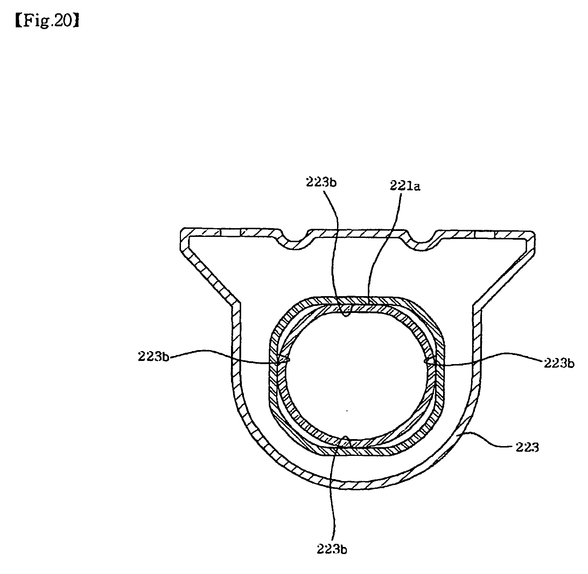

In addition, The straight inner diameter portion 223b formed in the flat surface 221 a of the end portion of the lower side tube 221 and the insertion hole 223a of the low mounting bracket 223 may be provided in multiple numbers at other positions as shown in Figure 20.

The above construction is provided for maintaining a certain gap and preventing the initial friction inertia force from being maximized.

In Figure 5, the reference numeral 600 represents a stopper unit for limiting the bending angles of the upper and lower directions of the tilt bracket 212.

The operations and operation states of the present invention will be described.

First, when adjusting the angle of the steering wheel by a driver, the handle 341 of the tilt lever 340 is pulled.

When the horizontal portion 342 of the tilt lever 340 is rotated about the hinge bolt 347, the inclination portion 346 formed in the extended portion 345 of the other side end pushes upwardly the side surface protrusion 324 protruded from the side of the driving gear 320 and pulls the wedge member 330 engaged with the protrusion 332 connected with the engaging hole 344 of the horizontal portion 342.

Therefore, since the lower surface wedge 331 of the wedge member 330 is distanced from the protrusion 323 of the upper surface of the driving gear 320, the driving gear 320 is lifted up, and the threaded portion 321 of the driving gear 320 which is lifted up is distanced from the threaded portion 311 of the fixing gear 310.

When the threaded portion 311 of the fixing gear 310 is distanced from the threaded portion 321 of the driving gear 320, as shown in Figure 7, the upper side shaft 101 and the tilt bracket 212 and the upper unit 210 including a part of the tilting adjusting unit 300 may be upwardly rotated and lifted up about the hinge pin 201 which is a tilt hinge point or may be downwardly rotated.

In a state that the tilt lever 340 is pulled, when the upper unit is in a desired position by upwardly and downwardly adjusting the same, in the above state, the tilt lever 340 is placed down.

At the moment when the tilt lever 340 is placed down, the tilt lever 340 is returned by a force of the tilt lever returning spring 350, and when the tilt lever is returned, the horizontal portion 342 and the extended portion 345 of the other end are returned. In addition, the above operation is implemented in such a manner that the wedge member 330 in which the connection protrusion 332 is engaged to the engaging hole 344 of the horizontal portion 342 is pulled.

The wedge member 330 is downwardly rotated by downwardly pressing the protrusion 323 of the upper surface of the driving gear 320 using the wedge portion 331 of the lower surface. At this time, the inclination portion 346 of the retracted extended portion 345 allows the side surface protrusion 324 of the driving gear 320 to be downwardly moved.

Therefore, the wedge member 330 returning by the spring 350 is inserted between the guard portion 212d formed in the upper portion of the tilt bracket 212 and the protrusion 323 of the upper surface of the driving gear 320. Since the wedge portion 331 of the wedge member 330 presses the protrusion 323 of the upper surface of the driving gear 320, the driving gear 320 is downwardly pressed, and the threaded portion 321 of the driving gear 320 is engaged with the threaded portion 311 of the fixing gear 310 for thereby completing a tilting adjustment.

In the steering tilt assembly according to the present invention, when an impact is applied in the longitudinal direction of the shaft, the initial impact absorbing unit 400 is first operated, and at the same time the impact absorbing unit 500 of the lower side of the lower side tube is operated for thereby absorbing the impact.

First, in the initial impact absorbing unit 400, the left and right wing portions 222a of the column bracket 222 are escaped from the capsule 410 fixed to the vehicle body by a bolt based on a certain friction force.

Namely, since the protrusions 413 inwardly protruded from the upper plate 411 and the lower plate 412 of the capsule 410 are engaged before the same are fully pressed, the impact is absorbed based on a friction force of the protrusions. As shown in Figure 15, in the case that a part of each protrusion 413 is inserted into the through hole 222d, since a friction force is larger, the initial impact absorbing force is large.

In addition, in the lower side impact absorbing unit 500, in a state that the straight line inner diameter portion 223b of the insertion hole 223a of the lower mounting bracket 223 is force-fit into the flat surface 221 a of the end portion of the lower side tube 221, when an impact occurs, the straight line inner diameter portion 223b of the insertion hole 223a is distanced from the flat surface 221a and goes to the cylindrical portion. Therefore, since the same must overcome the change of the outer diameter and must advance, it is possible to absorb the impact.

As described above, in the present invention, since there are provided a wedge member adapted to press the driving gear in the upper portion of the tilt bracket and a guard portion adapted to press the wedge member, it is possible to implement a stable engaged state of the fixing gear and the driving gear for continuously implementing a certain tilting state. In addition, it is possible to enhance a stability of the tilting state.

In addition, in the present invention, since the upward rotation of the driving gear is directly operated by the tilt lever, it is possible to remove the part of the conventional rotation member. Therefore, it is possible to enhance the productivity and decrease the fabrication cost.

In addition, when rotatably engaging the tilt lever, since as the lever hinge bolt, the bolt having a straight line portion is used, the engaging force of the bolt does not affect the rotation friction of the horizontal portion when the tilt lever is rotated. Therefore, it is possible to prevent a noise in the tilt lever and prevent a bolt from being loosened.

In addition, since the capsule for the initial impact absorbing unit is formed of a metallic material without using a synthetic resin material, and there is provided a structure with protrusions, it is possible to implement an easier fabrication, and the price is low, and it is possible to implement an initial impact absorption based on only the friction force between the capsule and the mounting bracket.

In addition, since an engaging structure of the lower portion of the column and the lower bracket has a cross section portion with a decreased diameter and is directly engaged to the vehicle body through the lower bracket, it is possible to implement an impact absorbing unit without an additional inner tube inserted into the lower side of the lower side tube like the conventional art.

## Claims

1. A steering tilt column assembly comprising:
- a steering shaft (100) which includes an upper side shaft (101) and a lower side shaft (102) connected with a universal shaft joint (103) in their lower and upper ends;
- an upper unit (210) which is formed of an upper side tube (211) which has the steering shaft (100) inside and surrounds a portion of the upper side shaft (101), a tilt bracket (212) connected with the upper side tube (211), and a shroud bracket (213) for fixing the above elements to a vehicle body;
- a lower unit (220) which is formed of a lower side tube (221) which surrounds the portion of the lower side shaft (102), a column bracket (222) which is connected with an upper end of the lower side tube (221), and a lower mounting bracket (223) adapted to fix a lower end of the lower side tube (221) to a vehicle body;
- hinge pin holes (212b) formed in left and right sides of the tilt bracket (212) and hinge pin holes (212b) formed in left and right sides of the column bracket (222) being engaged using a hinge pin (201), so that the upper unit (210) including the upper side shaft (101) is bent at a certain angle about the hinge pin (201) with respect to the lower unit (220) including the lower side shaft (102);
- a tilting adjusting means (300) which includes a fixing gear (310) and a driving gear (320) between the column bracket (222) and the tilt bracket (212), said tilting adjusting means (300) including:
-- a fixing gear (310) which is fixed to an upper surface of the column bracket (222) and has a toothed portion (311) in an upper side surface;
-- a driving gear (320) in which a toothed portion (321) of a lower surface is engaged with the toothed portion (311) of the fixing gear (310), said driving gear (320) being rotatable on the tilt bracket (212) and comprising a protrusion (323) formed in its upper surface;
-- a wedge member (330) which has a wedge portion (331) in a lower surface for pressing the protrusion (323) of the driving gear (320), and of which the upper side is downwardly pressed by a guard portion (212d) which is formed across both sides of the tilt bracket (212);
-- a tilt lever (340) which is formed of a horizontal portion (342) having a hinge hole (343) which is rotatable on the tilt bracket (212) by inserting a hinge bolt (347), a handle portion (341) extended from one end of the horizontal portion (342) and an extended portion (345) adapted to lift up the driving gear (320); and
-- a spring (230) adapted for the upper unit (210) to operate in a tilting direction always,
**characterized in that**
- the column bracket (222) has a capsule assembling slot (222b) in its left and right wing portion (222a);
- the wedge member (330) is connected to the tilt lever (340) through a connection protrusion (332) received in an engaging hole of the tilt lever (340);
- the extended portion (345) of the tilt lever (340) is located at the other end of the horizontal portion (342) and has an inclination portion (346) cooperating with a side surface protrusion (324) of the driving gear (320); and
- a spring (350) is provided for supporting the upper surface of the driving gear (320) by pulling the wedge member (330) and simultaneously for returning the tilt lever (340) to the original position in which the driving gear (320) engaged the fixing gear (310).

2. The assembly of claim 1, wherein the hinge bolt (347) which is coupled by inserting the same into said hinge hole (343) of the tilt lever (340) and has a length L larger than the thickness of the horizontal portion (342) of the tilt lever (340) and a diameter D larger than the screw portion of the same is formed for thereby preventing a friction resistance with respect to the rotation of the tilt lever (340).

3. The assembly of claim 1, wherein said column bracket (222) includes an initial impact absorbing means (400) in such a manner that a capsule (410) is inserted into the slot (222b) of the wing portion (222a) formed in left and right sides and is engaged to a vehicle body wherein said capsule (410) includes an upper plate (411) having a plurality of protrusions (413) in a lower surface of the same, a lower plate (412) having a plurality of protrusions (413) in an upper surface of the same, and an elastic portion (414) which integrally connects one side of the upper plate and one side of the lower plate.

4. The assembly of claim 3, wherein said column bracket (222) includes a mounting groove (222c) for mounting the capsule (410) therein in a surrounding portion of the slot (222b), and through holes (222d) corresponding to the positions of the protrusions (413) of the capsule are formed in the mounting groove (222c).

5. The assembly of claim 3, wherein said capsule (410) has an elliptical bolt hole in a center portion of the upper plate (411) of the same for thereby forming an upper side support member in such a manner that an inner circumferential portion of the bolt hole is downwardly extended and has an elliptical bolt hole in a center portion of the lower plate (412) of the same for thereby forming a lower side support member in such a manner that an inner circumferential portion of the bolt hole is upwardly extended, so that the upper plate (411) and the lower plate (412) are spaced apart by a certain distance by the upper and lower side support members.

6. The assembly of claim 5, wherein an end portion of the support member of the upper plate (411) of the capsule (410) and an end portion of the support member of the lower plate (412) of the capsule (410) has a certain width W therebetween which is not larger, than the height h of the protrusions (413) formed in the upper plate (411) and the lower plate (412) when the upper plate (411) and the lower plate (412) are in parallel each other.

7. The assembly of claim 1, wherein an impact absorbing means is provided between the lower side tube (221) and the lower mounting bracket (223), and the lower side tube (221) is formed in an integral shape and has an end portion of which an outer diameter is gradually decreased for thereby forming a flat surface therein, and the lower mounting bracket (223) has an insertion hole (223a) having a straight line inner diameter portion (223b) for thereby matching with a cross section of the end portion of the flat surface of the lower side tube (221), so that in a state that the above matching elements are assembled each other, the straight line inner diameter portion (223b) of the insertion hole (223a) is escaped from the flat surface when an impact occurs for thereby increasing a friction force and absorbing the impact.

8. The assembly of claim 7, wherein the flat surface of the end portion of the lower side tube (221) and said straight line inner diameter portions (223b) formed in the insertion hole (223a) of the lower mounting bracket (223) have corresponding positions each other and are formed in multiple numbers, respectively.

9. The assembly of claim 7, wherein said lower mounting bracket (223) has an insertion hole (223a), and an inner extended portion is extended from one side of the inner circumferential portion of the insertion hole (223a) for thereby enhancing a friction force.

## Patentansprüche

1. Neigbare Lenksäulenbaueinheit, mit:
- einer Lenkwelle (100), die eine obere Welle (101) und eine untere Welle (102) umfasst, die an ihrem unteren bzw. ihrem oberen Ende über ein Universalwellengelenk (103) miteinander verbunden sind;
- einer oberen Einheit (210), die aus einem oberen Rohr (211), in dem sich die Lenkwelle (100) befindet und das einen Abschnitt der oberen Welle (101) umgibt, aus einem Neigungsträger (212), der mit dem oberen Rohr (211) verbunden ist, und aus einem Abdeckträger (213) zum Befestigen der oben genannten Elemente an einer Fahrzeugkarosserie gebildet ist;
- einer unteren Einheit (220), die aus einem unteren Rohr (221), das den Abschnitt der unteren Welle (102) umgibt, aus einem Säulenträger (222), der mit einem oberen Ende des unteren Rohrs (221) verbunden ist, und aus einem unteren Montageträger (223), der so beschaffen ist, dass er ein unteres Ende des unteren Rohrs (221) an einer Fahrzeugkarosserie befestigt, gebildet ist;
- Scharnierstiftlöchern (212b), die auf der linken und auf der rechten Seite des Neigungsträgers (212) gebildet sind, und Scharnierstiftlöchern (212b), die auf der linken und auf der rechten Seite des Säulenträgers (222) gebildet sind und unter Verwendung eines Scharnierstifts (201) in Eingriff sind, so dass die obere Einheit (210), die die obere Welle (101) umfasst, unter einem bestimmten Winkel um den Scharnierstift (201) in Bezug auf die untere Einheit (220) einschließlich der unteren Welle (102) gebogen werden kann;
Neigungseinstellmitteln (300), die ein Befestigungszahnrad (310) und ein Antriebszahnrad (320) zwischen dem Säulenträger (222) und dem Neigungsträger (212) aufweisen, wobei die Neigungseinstellmittel (300) umfassen:
-- ein Befestigungszahnrad (310), das an einer oberen Oberfläche des Säulenträgers (222) befestigt ist und in einer oberen Oberfläche einen gezahnten Abschnitt (311) besitzt;
-- ein Antriebszahnrad (320), wovon ein gezahnter Abschnitt (321) einer unteren Oberfläche mit dem gezahnten Abschnitt (311) des Befestigungszahnrades (310) in Eingriff ist, wobei das Antriebszahnrad (320) an dem Neigungsträger (212) drehbar ist und einen in seiner oberen Oberfläche ausgebildeten Vorsprung (323) aufweist;
-- ein Keilelement (330), das an seiner unteren Oberfläche einen Keilabschnitt (331) aufweist, um auf den Vorsprung (323) des Antriebszahnrades (320) zu drücken, und wovon die Oberseite durch einen Führungsabschnitt (212d), der über beide Seiten des Neigungsträgers (212) hinweg gebildet ist, nach unten gedrückt wird;
-- einen Neigungshebel (340), der aus einem horizontalen Abschnitt (342) mit einem Scharnierloch (343), das an dem Neigungsträger (212) durch Einschieben eines Scharnierbolzens (347) drehbar ist, aus einem Griffabschnitt (341), der sich von einem Ende des horizontalen Abschnitts (342) erstreckt, und aus einem verlängerten Abschnitt (345), der so beschaffen ist, dass er das Antriebszahnrad (320) anhebt, gebildet ist; und
-- eine Feder (230), die so ausgelegt ist, dass die obere Einheit (210) stets in einer geneigten Richtung arbeitet,
**dadurch gekennzeichnet, dass**
- der Säulenträger (222) in seinem linken und in seinem rechten Flügelabschnitt (222a) einen Kapselmontageschlitz (222b) besitzt;
- das Keilelement (330) mit dem Neigungshebel (340) über einen Verbindungsvorsprung (332) verbunden ist, der in einem Eingriffloch des Neigungshebels (340) aufgenommen ist;
- der verlängerte Abschnitt (345) des Neigungshebels (340) sich am anderen Ende des horizontalen Abschnitts (342) befindet und einen Neigungsabschnitt (346) besitzt, der mit einem Seitenoberflächenvorsprung (324) des Antriebszahnrades (320) zusammenwirkt; und
- eine Feder (350) vorgesehen ist, um die obere Oberfläche des Antriebszahnrades (320) durch Ziehen des Keilelements (330) und gleichzeitiges Zurückstellen des Neigungshebels (340) in die Ausgangsposition, in der das Antriebszahnrad (320) mit dem Befestigungszahnrad (310) in Eingriff ist, zu unterstützen.

2. Baueinheit nach Anspruch 1, bei der der Scharnierbolzen (347), der durch Einführen in das Scharnierloch (343) des Neigungshebels (340) gekoppelt ist und eine Länge L besitzt, die größer als die Dicke des horizontalen Abschnitts (342) des Neigungshebels (340) ist, wobei ein Durchmesser D größer als dessen Gewindeabschnitt ausgebildet ist, um **dadurch** einen Reibwiderstand in Bezug auf die Drehung des Neigungshebels (340) zu verhindern.

3. Baueinheit nach Anspruch 1, bei der der Säulenträger (222) ein Anfangsstoß-Absorptionsmittel (400) in der Weise aufweist, dass in dem Schlitz (222b) des Flügelabschnitts (222a), der auf der linken und auf der rechten Seite ausgebildet ist, eine Kapsel (410) eingeschoben ist und mit einer Fahrzeugkarosserie in Eingriff ist, wobei die Kapsel (410) eine obere Platte (411) mit mehreren Vorsprüngen (413) in ihrer unteren Oberfläche, eine untere Platte (412) mit mehreren Vorsprüngen (413) in ihrer oberen Oberfläche und einen elastischen Abschnitt (414), der eine Seite der oberen Platte und eine Seite der unteren Platte einteilig verbindet, umfasst.

4. Baueinheit nach Anspruch 3, bei der der Säulenträger (222) eine Montagenut (222c) für die Montage der Kapsel (410) in einem umgebenden Abschnitt des Schlitzes (222b) aufweist, wobei in der Montagenut (222c) Durchgangslöcher (222d), die den Positionen der Vorsprünge (413) der Kapsel entsprechen, ausgebildet sind.

5. Baueinheit nach Anspruch 3, bei der die Kapsel (410) in einem Mittelabschnitt ihrer oberen Platte (411) ein elliptisches Bolzenloch aufweist, um **dadurch** ein oberes Trägerelement in der Weise zu bilden, dass sich ein innerer Umfangsabschnitt des Bolzenlochs nach unten erstreckt, und ein elliptischesBolzenloch in einem Mittelabschnitt ihrer unteren Platte (412) besitzt, wodurch ein unteres Trägerelement in der Weise gebildet ist, dass sich ein innerer Umfangsabschnitt des Bolzenlochs nach oben erstreckt, so dass die obere Platte (411) und die untere Platte (412) durch das obere und das untere Trägerelement um eine bestimmte Strecke voneinander beabstandet sind.

6. Baueinheit nach Anspruch 5, bei der ein Endabschnitt des Trägerelements der oberen Platte (411) der Kapsel (410) und ein Endabschnitt des Trägerelements der unteren Platte (412) der Kapsel (410) zwischen sich eine bestimmte Weite W besitzen, die nicht größer als die Höhe h der Vorsprünge (413) ist, die in der oberen Platte (411) und in der unteren Platte (412) ausgebildet sind, wenn die obere Platte (411) und die untere Platte (412) zueinander parallel sind.

7. Baueinheit nach Anspruch 1, bei der ein Stoßabsorptionsmittel zwischen dem unteren Rohr (221) und dem unteren Montageträger (223) vorgesehen ist und das untere Rohr (221) in einer einteiligen Form ausgebildet ist und einen Endabschnitt besitzt, wovon ein Außendurchmesser allmählich abnimmt, um **dadurch** in ihm eine ebene Oberfläche zu bilden, und der untere Montageträger (223) ein Einführungsloch (223a) mit einem geradlinigen Innendurchmesserabschnitt (223b) besitzt, der **dadurch** an einen Querschnitt des Endabschnitts der ebenen Oberfläche des unteren Rohrs (221) angepasst ist, so dass in einem Zustand, in dem die obigen Passelemente zusammengefügt sind, der geradlinige Innendurchmesserabschnitt (223b) des Einführungslochs (223a) von der ebenen Oberfläche weggeführt wird, wenn ein Stoß erfolgt, wodurch eine Reibungskraft erhöht und der Stoß absorbiert wird.

8. Baueinheit nach Anspruch 7, bei der die ebene Oberfläche des Endabschnitts des unteren Rohrs (221) und die geradlinigen Innendurchmesserabschnitte (223b), die in dem Einführungsloch (223a) des unteren Montageträgers (223) ausgebildet sind, einander entsprechende Positionen besitzen und jeweils mehrfach vorgesehen sind.

9. Baueinheit nach Anspruch 7, bei der der untere Montageträger (223) ein Einführungsloch (223a) besitzt und ein innerer verlängerter Abschnitt sich von einer Seite des inneren Umfangsabschnitts des Einführungslochs (223a) erstreckt, um **dadurch** eine Reibungskraft zu erhöhen.

## Revendications

1. Un ensemble de colonne de direction réglable en inclinaison, comprenant :
- un arbre de direction (100), comprenant un arbre de côté supérieur (101) et un arbre de côté inférieur (102), reliés à un joint d'arbre articulé (103), à leurs extrémités inférieures et supérieures ;
- une unité supérieure (210) formée d'un tube de côté supérieur (211) à l'intérieur duquel est monté l'arbre de direction (100) et entourant une partie de l'arbre de côté supérieur (101), un support inclinable (212) relié au tube de côté supérieur (211), et un support d'enveloppe (213) pour fixer les éléments ci-dessus à une caisse de véhicule ;
- une unité inférieure (220), formée d'un tube de côté inférieur (221) entourant la partie de l'arbre de côté inférieur (102), un support de colonne (222), relié à une extrémité supérieure du tube de côté inférieur (221), et un support de montage inférieur (223), adapté pour fixer une extrémité inférieure du tube de côté inférieur (221) à une caisse de véhicule ;
- des trous de tige d'articulation (212b) formés dans des côtés gauche et droit du support réglable en inclinaison (212) et des trous de tige d'articulation (212b) formés dans des côtés gauche et droit du support de colonne (222) étant mis en prise avec utilisation d'une tige de charnière (201), de manière que l'unité supérieure (210) comprenant l'arbre de côté supérieur (101) soit fléchi sous un certain angle autour de la tige de charnière (201) par rapport à l'unité inférieure (220) incluant l'arbre de côté inférieur (102) ;
- des moyens d'ajustement d'inclinaison (300) comprenant un élément de transmission de fixation (310) et un élément de transmission d'entraînement (320), entre le support de colonne (222) et le support réglable en inclinaison (212), les moyens d'ajustement d'inclinaison (300) comprenant :
-- un élément de transmission de fixation (310) fixé sur une surface supérieure du support de colonne (222) et ayant une partie dentée (311) sur une surface latérale supérieure ;
-- un élément de transmission d'entraînement (320) dans lequel une partie dentée (321) d'une surface inférieure est engrenée avec la partie dentée (311) de l'élément de transmission de fixation (310), ledit élément de transmission d'entraînement (320) étant susceptible de tourner sur le support réglable en inclinaison (212) et comprenant une saillie (323) formée sur sa surface supérieure ;
-- un organe formant coin (330) ayant une partie formant coin (331) sur une surface inférieure, afin de presser la saillie (323) de l'élément de transmission d'entraînement (320), et dont la face supérieure est pressée vers le bas par une partie de garde (212d) formée sur les deux côtés du support réglable en inclinaison (212) ;
-- un levier d'inclinaison (340) formé d'une partie horizontale (342) ayant un trou d'articulation (343) et qui est susceptible de tourner sur le support réglable en inclinaison (212) par insertion d'un boulon de charnière (347), une partie de manette (341), s'étendant depuis une extrémité de la partie horizontale (342), et une partie de prolongement (345), adaptée pour lever l'élément de transmission d'entraînement (320) ; et
-- un ressort (230) adapté pour que l'unité supérieure (210) assure un actionnement permanent dans le sens de l'inclinaison,
**caractérisé en ce que**
- le support de colonne (222) comprend une fente d'assemblage de capsule (222b) à sa partie d'aile gauche et droite (222a) ;
- l'organe formant coin (330) est relié au levier d'inclinaison (340) par l'intermédiaire d'une saillie de liaison (332) logée dans un trou d'engagement du levier d'inclinaison (340) ;
- la partie de prolongement (345) du levier d'inclinaison (340) est placée à l'autre extrémité de la partie horizontale (342) et présente une partie d'inclinaison (346), coopérant avec une saillie de surface latérale (324) de l'élément de transmission d'entraînement (320) ; et
- un ressort (350) est prévu pour supporter la surface supérieure de l'élément de transmission d'entraînement (320) par traction de l'organe formant coin (330) et, simultanément, pour ramener le levier d'inclinaison (340) à la position d'origine dans laquelle l'élément de transmission d'entraînement (320) est engrené avec l'élément de transmission de fixation (310).

2. L'ensemble selon la revendication 1, dans lequel le boulon de charnière (347) qui est couplé par insertion de celui-ci dans ledit trou de charnière (343) du levier d'inclinaison (340) et présente une longueur L supérieure à l'épaisseur de la partie horizontale (342) du levier d'inclinaison (340) et un diamètre D supérieur à la longueur de la partie filetée ou crénelée de celui-ci, pour de cette manière empêcher qu'une résistance par friction se développe par rapport à la rotation du levier d'inclinaison (340).

3. L'ensemble selon la revendication 1, dans lequel ledit support de colonne (222) comprend des moyens d'absorption d'impact initial (400), de telle manière qu'une capsule (410) soit insérée dans la fente (222b) de la partie d'aile (222a) formée dans les côtés gauche et droit et soit engagée dans une caisse de véhicule, dans lequel ladite capsule (410) comprend une plaque supérieure (411) ayant une pluralité de saillies (413) dans une surface inférieure de celle-ci, une plaque inférieure (412) ayant une pluralité de saillies (413) dans une surface supérieure de celle-ci, et une partie élastique (414) reliant d'une seule pièce un côté de la plaque supérieure et un côté de la plaque inférieure.

4. L'ensemble selon la revendication 3, dans lequel ledit support de colonne (222) comprend un évidement de montage (222c) pour y monter la capsule (410) dans une partie entourant la fente (222b), et des trous traversants (222d), correspondant aux positions des saillies (413) de la capsule, sont formés dans l'évidement de montage (222c).

5. L'ensemble selon la revendication 3, dans lequel ladite capsule (410) présente un trou elliptique pour boulon dans une partie centrale de la plaque supérieure (411) de celle-ci, pour de cette manière former un élément support de côté supérieur, de manière qu'une partie circonférentielle intérieure du trou de boulon s'étende vers le bas et ait un trou elliptique de boulon dans une partie centrale de la plaque inférieure (412) de celle-ci, pour de cette manière former un élément support de côté inférieur, de manière qu'une partie circonférentielle intérieure du trou de boulon soit étendue vers le haut, de manière que la plaque supérieure (411) et la plaque inférieure (412) soient espacées d'une certaine distance, par les éléments support de côté supérieur et inférieur.

6. L'ensemble selon la revendication 5, dans lequel une partie d'extrémité de l'élément support de la plaque supérieure (411) de la capsule (410) et une partie d'extrémité de l'élément support de la plaque inférieure (412) de la capsule (410) présentent entre elles une certaine largeur W, non supérieure à la hauteur h des saillies (413) formées dans la plaque supérieure (411) et la plaque inférieure (412), lorsque la plaque supérieure (411) et la plaque inférieure (412) sont parallèles l'une à l'autre.

7. L'ensemble selon la revendication 1, dans lequel des moyens d'absorption d'impact sont prévus entre le tube de côté inférieur (221) et le support de montage inférieur (223), et le tube de côté inférieur (221) est formé d'une seule pièce et présente une partie d'extrémité dont le diamètre extérieur diminue graduellement, pour de cette manière former sur lui une surface plane, et le support de montage inférieur (223) présente un trou d'insertion (223a) ayant une partie de diamètre intérieur (223b) rectiligne, pour de cette manière s'adapter à une section transversale de la partie d'extrémité de la surface plane sur le tube de côté inférieur (221), de manière que, dans un état dans lequel les éléments d'adaptation ci-dessus sont assemblés entre eux, la partie de diamètre intérieur rectiligne (223b) du trou d'insertion (223a) s'échappe de la surface plane lorsqu'un impact se produit, pour de cette manière augmenter la force de friction et absorber l'impact.

8. L'ensemble selon la revendication 7, dans lequel la surface plane de la partie d'extrémité du tube de côté inférieur (221) et lesdites parties de diamètre intérieur rectiligne (223b), formées dans le trou d'insertion (223a) du support de montage inférieur (223), ont des positions se correspondant entre elles et sont formées en plusieurs exemplaires, respectivement.

9. L'ensemble selon la revendication 7, dans lequel ledit support de montage inférieur (223) comprend un trou d'insertion (223a), et une partie de prolongement intérieure est prolongée depuis un côté de la partie circonférentielle intérieure du trou d'insertion (223a), pour de cette manière améliorer la force de friction.
